# EUROPEAN PATENT SPECIFICATION

(11) **EP 0 846 052 B1**
(45) Date of publication and mention of the grant of the patent: **22.12.1999**
(21) Application number: 96927690.6
(22) Date of filing: 06.08.1996
(51) Int. Cl.: B29C 51/30, B29C 63/04, B29C 53/04

(54) **THERMOFORMING MOLD WITH TRIMMING MOVABLE SIDE BLADES**
WERKZEUG ZUM THERMOFORMEN MIT BEWEGBAREN BESCHNEIDELEMENTE
MOULE DE THERMOFORMAGE POURVU DE LAMES LATERALES MOBILES D'EBARBAGE

(30) Priority: 21.08.1995 IT SV950011
(43) Date of publication of application: 10.06.1998
(73) Proprietor: G.O.R. Applicazioni Speciali S.p.A., 10060 Buriasco, Torino (IT)
(72) Inventor: ODINO, Adriano, I-10060 Angrogna (IT)
(74) Representative: Karaghiosoff, Giorgio Alessandro, Dipl.-Phys.
(86) International application number: EP9603464
(87) International publication number: WO9706939

(56) References cited:
- EP-A- 0 495 292
- EP-A- 0 603 498
- EP-A- 0 637 500
- GB-A- 2 195 940
- PATENT ABSTRACTS OF JAPAN vol. 94, no. 012 & JP,A,06 341121 (KEIHAN CONCRETE KOGYO KK), 13 December 1994,

## Description

The present invention relates to thermoforming molds, provided with a counter mold co-operating at least with their fringe part, and with one or more movable side members, which can be approached and moved away, for trimming and eventually molding the edges of the thermoformed object, while the latter is still secured between the mold and the counter mold.

The thermoforming molds of the above-mentioned type can be of any kind, negative or positive, concave and/or convex, vacuum-operated (suction) and/or compressed air-operated, with or without pre-drawing blow, with or without pre-stretching punches, while the counter mold can be provided only at the fringe part of the mold, actually having the only function to secure on the mold the corresponding peripheral portion of the plate or sheet to be molded, or can additionally spread over at least part of the molding surface of the mold and can cooperate with the latter participating in the plate or sheet molding operation.

The plates or sheets that can be worked by this type of molds can be made of any thermoformable material, simple or compound, single- or multilayer, and can particularly include: natural or synthetic fibre fabric, such as cotton, polyester fibres, viscose or polypropylene, and the like, thermoplastic materials, more or less pure or filled, such as polyethylene, polypropylene, polyester, elastomers, and others, and foamed materials, such as polypropylene, polyvinyl chloride, polyethylene, polyester, polyether, polyurethane and others. The movable members for trimming and eventually molding the edges of the thermoformed object while the latter is still secured at least in its Peripheral portion between the mold and the counter mold, can be provided in any suitable number around the mold, according to the perimeter profile of the mold itself, and can be supported, guided, moved and operated in any suitable way, simultaneously or separately and independently. Thus, for instance, in a preferred embodiment, each movable side member for trimming and eventually molding the edges is an integral component of its respective saddle, which slides on guides transversely to the mold, with an approaching and departing movement from the mold itself, and can be moved by means of any pneumatic, hydraulic, mechanical, electrical or else actuators, fit to exert the necessary trimming or molding pressure variable in a very wide range, according to the thickness and type of the thermoformed material.

In every prior art mold of the above-mentioned type, the movable side meters for trimming and eventually molding are cold, that is room temperature, therefore their action both of trimming and molding is not satisfactory. Particularly when the movable side members is so profiled as to produce, beside the trimming, also the folding of the edge of the external cover layer of a minimum two layer plate or sheet, on the edge of the lower layer(s), the said edge of the lower layer(s) can be not completely covered, as the material of the external cover layer tends to shrink as soon as it is cut by the cold blade after folding, thus producing aesthetic defects. Similar shrinking drawbacks for the edge of the external cover layer in the case of multilayer plates or sheets also occur when the trimming movable side blade exerts an additional molding action, co-operating by means of its own molding surface with a corresponding molding surface of the mold, and this without considering that the molding action itself by the cold member can often be unsatisfactory. Due to the above reasons, the objects produced by the above thermoforming molds had to pass through further finishing work and operations, even manual, to eliminate the afore said defects.

A thermoforming mold of the above mentioned type is known from document EP-A-637 500. The said document discloses a process for producing a panel for fitment inside the passenger compartment of a vehicle. The process includes a first stage consisting in hot pressing, forming and mutually joining a main supporting sheet and a cover sheet and a second stage consisting in folding and stably fixing at least one portion of the edge of the panel on to the surface of the supporting sheet facing away from the cover sheet.

The said process is carried out by means of movable side members having the only function as folders and not being heated. The edges of the panel are heated by separate heaters movably arranged on one of the two co-operating parts of the mold and which are actuated in an intermediate step of the process between the shaping of the panel and the driving of the movable side members.

Document GB 2195940 discloses a mold with movable side members having cutting parts profiled and made - depending also on the direction of its movement - in such a way as to produce but a trimming cut of the corresponding edge of the thermoformed object. However, it is preferable, particularly when thermoforming is made on plates or sheets composed of at least two layers, that the cutting part of at least one of the movable side blades with which the mold is supplied be profiled and made in such a way, as to produce, beside the trimming of the corresponding edge of the thermoformed object, also the folding of the edge towards the mold, and particularly the folding of the external cover layer on the edge on the lower layer(s). In another embodiment, the cutting part of at least one of the movable side blades with which the mold is supplied can have a molding surface cooperating with a complementary molding surface of the mold in such a way as to exert a molding action on one portion of the edge of the thermoformed object, that is to compress said portion of the edge between the molding surface of the side blade and the corresponding molding surface of the mold.

The present invention aims at avoiding the aforementioned drawbacks in the molding devices of the above type, and substantially solves this problem through the fact that the said movable side members are in the form of side blades and at least one of the movable side blades , being heatable.

Heating of the movable side blades for trimming and/or molding with which the thermoforming mold is supplied, can be achieved in any suitable way, for instance through exposure to irradiation of infrared or quartz lamps, through circulation of a hot fluid, through contact with heating elements, or through exposure to flames, or else. According to a preferred embodiment of the invention, however, heating of the movable side blades for trimming and/or molding, with which the mold is supplied is achieved by means of resistors incorporated inside the respective blade and/or applied outside it. Heating through resistors allows an easy and accurate variation and control of the temperature of the trimming and/or molding blades, in order to adapt it to the thickness and/or type of the material of the thermoformed plate or sheet. For this purpose, according to a further object of the invention, the heated blade can be provided with at least one measuring and controlling probe, of any suitable kind, for its temperature. Values for external temperature of the cutting part of the heated side blades can be - according to the thickness and type of the thermoformed material - between 40 and 500 °C, preferably between 100 and 250 °C.

The invention is advantageously applicable to any thermoforming mold known up to this moment, and particularly to those above described. In any case, thanks to the heating of the movable side blades with which the mold is supplied, a rapid, clean, and accurate trimming cut of the edges of the thermoformed object is obtained, independent of the thickness and type of material of that object, while the cutting pressure can be even considerably reduced if compared with the pressure required up to now. If trimming is made on thermoformed plates and sheets composed of two or more layers, aesthetic defects due to the shrinking of the edge of the external cover layer after the trimming cut are avoided, because during this cut, the edges of the superimposed layers are welded and wire locked by the hot blade. The same effect of welding of the edges while trimming by the hot blade is obtained when the blade is so profiled as to produce the folding of the edge of the external cover layer on the lower layer(s), hence preventing the shrinking of the folded edge of the external cover layer and ensuring a complete and stable covering of the trimmed edges of the lower layer(s). Moreover, thanks to the invention, when the movable side blade with which the mold is supplied exerts, beside trimming, also a molding action, co-operating with a corresponding surface of the mold, the heating of the blade facilitates said molding operation and makes it more accurate and stable, especially in the case of thicker thermoplastic materials.

Some embodiments of the invention are diagrammatically shown, not by way of limitation, in the annexed drawings, in which:
Fig. 1 shows a sectional view of a fringe part of a thermoforming mold, with an additional trimming heatable blade of the invention.
Fig. 2 shows a magnified view of the peripheral portion of the object thermoformed by the mold of fig. 1.
Fig. 3 shows a sectional view of a fringe part of another thermoforming mold, with an additional trimming and molding heatable blade of the invention.
Fig. 4 shows a magnified view of the peripheral portion of the object thermoformed by the mold of fig. 3.
Figs. 5 and 6 show a front view of two possible profiles of the cutting edge of the trimming heatable blade.

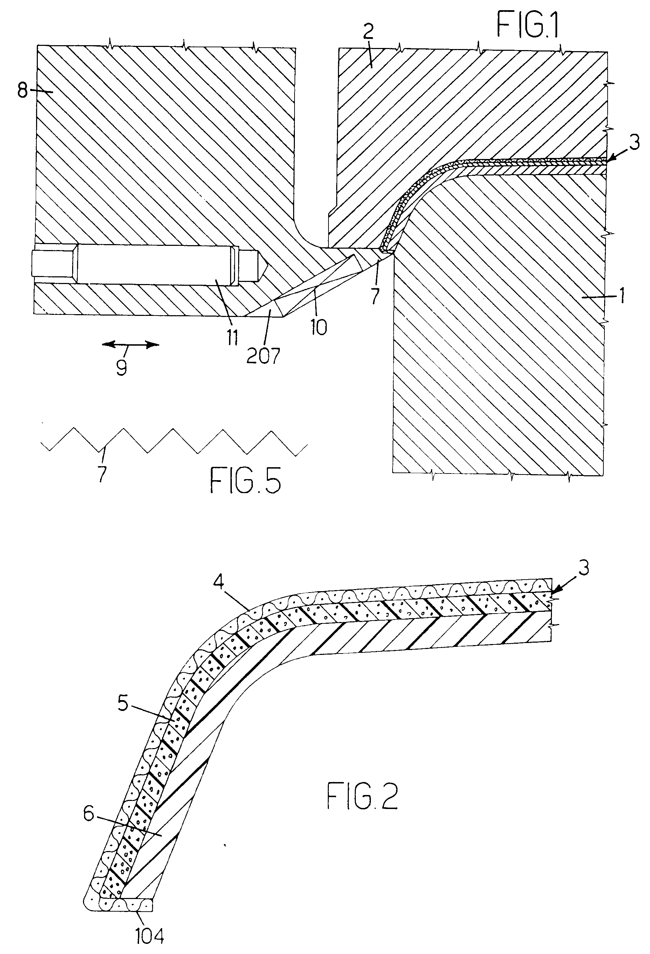

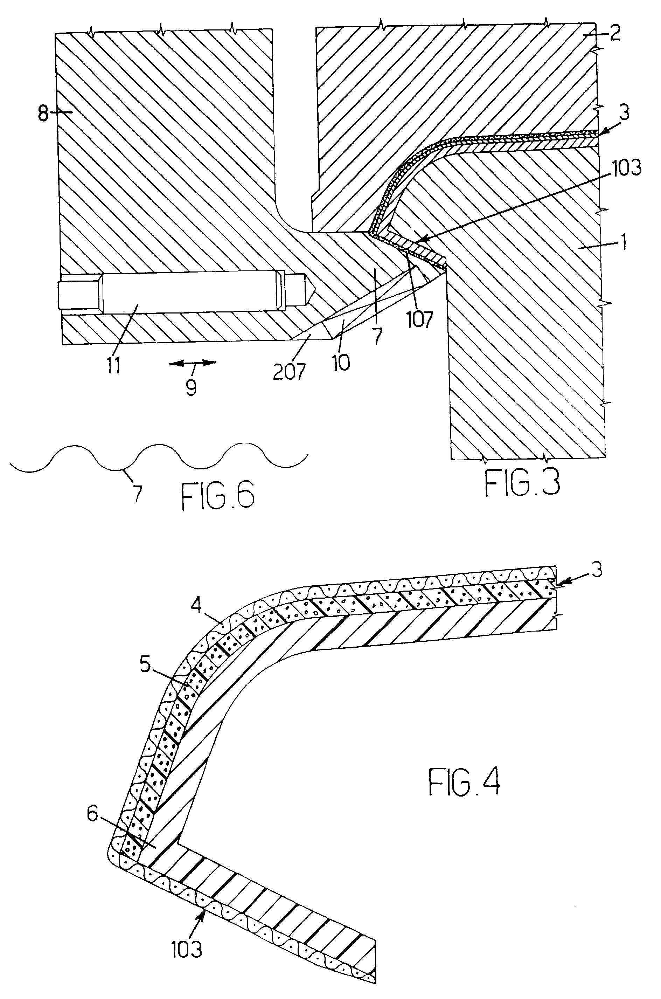

In both figs. 1 and 3, 1 is the fringe part of a thermoforming mold which can be of any kind as for the rest of its surface, not shown, which can have any form, for example concave or convex or partially concave and partially convex. The fringe part 1 of the mold has a rounded edge and cooperates with a matching counter mold 2, which can be provided only as coincident with said fringe part 1 of the mold, with the only substantial function to secure on said fringe part 1 of the mold the corresponding peripheral portion of the plate or sheet 3 to be molded. Counter mold 2 can however extend over at least part of the rest of the surface of the mold, where it can cooperate with the mold to obtain the molding of plate or sheet 3. Plate or sheet 3, heated to such an extent as to make them moldable, are laid on the mold and forced to adhere to it. The molding action exerted on the plate or sheet can be mechanical, that is generated by the matching of the mold and the counter mold, and/or pneumatic, that is generated by vacuum (suction) or compressed air, according to a well-known procedure.

In both embodiments shown in figs. 1, 2 and 3, 4, the plate 3 to be molded is composed of a multilayer material comprising an external or cover layer 4, made, for example, of a textile and/or a plastic, particular thermoplastic film, such as PVC. The plate 3 to be molded additionally comprises an intermediate foamed plastic layer 5, and an inner third layer 6, made of plastic material filled with dust and/or saw dust and/or wood particles, in particular with a thermoplastic material known with the WOODSTOCK trademark. The invention is obviously not limited to molds for thermoforming this particular three-layer material, but can be also applied to molds for thermoforming any other kind of thermoformable material, even single-layer and two-layer or more than three-layer.

On the side of the fringe part 2 of the mold, there are provided one or more blades 7 integral each for example with a bladeholder 8 which is movable transversely to the mold in the direction of the arrow 9, so as to approach and to move away the blade 7 to and from the mold. A mold can be supplied with one or more movable side blades 7, which can extend only on part of the mold perimeter (when there is no interest in trimming and/or molding the edges of the thermoformed object as regards the rest of its perimeter) or can extend on the whole of the perimeter of the mold, as it generally occurs. The guidance and operation of the bladeholder saddles 8 in the direction of the double arrow 9 can be made through any suitable means, for example with the help of pneumatic, hydraulic, mechanical or else actuators, according to a well known and thus not shown procedure. The side blade(s) 7, or rather the bladeholder saddles 8 can move on a plane which is perpendicular to the moving direction of counter mold 2 with respect to the mold, for example on a horizontal plane, otherwise they can move on a plane which is inclined with respect to the moving direction of counter mold 2 with respect to the mold, for example on a plane which is inclined with respect to the horizontal plane.

The movable side blades 7 with which the mold is supplied are first designed to trim the edges of the thermoformed object, at the end of the thermoforming operation and while the thermoformed object is still inside the mold, being hence secured at least between the fringe part 1 of the mold and the corresponding counter mold 2. Particularly, in the illustrated embodiments, each blade 7 is designed to cut away the protruding edge of the corresponding peripheral portion of the thermoformed plate 3, which protrudes downward from the vice between the fringe part of the mold and the corresponding portion of the counter mold 2. For this purpose, blade 7 skims along the lower edge of counter mold 2 and its cutting edge cooperates with a corresponding external side anvil surface of the fringe part 1 of the mold. In the embodiment shown in figs. 1 and 2, the cutting part of blade 7 is also profiled in such a way as to fold - while trimming - the edge 104 of the external cover layer 4 on the head surfaces of the edges of the two lower layers 5 and 6, as shown in fig. 2.

In the embodiment shown in figs. 3 and 4, the upper rounded edge is jointed by means of an inclined back draft surface, so-called molding surface, to the rest of the external side surface of the fringe part 2 of the mold. The corresponding movable side blade 7 is designed not only to trim the edges of the thermoformed plate 3, but also to exert a molding action on said edges, that is to fold the peripheral edge 103 of the thermoformed plate 3 around the protruding rounded edge of the fringed portion 1 of the mold and to force said edge 103 to adhere to said inclined back draft surface, that is to the external molding surface of the mold 2. For this purpose, the side blade 7 has a corresponding inclined molding surface 107, which comes to match - at the end of the movement of blade 7 towards the mold and when said peripheral edge 103 of the thermoformed plate 3 is interposed - with the external inclined molding surface of the fringe part 2 of the mold. The trimming operation, which is made by cutting the protruding portion of the edge of the thermoformed plate 3 by the cutting edge of blade 7, occurs correspondingly to the end of the external inclined molding surface of the fringe part 2 of the mold.

In both the above described embodiments, the trimming (figs. 1 and 2) or trimming and molding (figs. 3 and 4) movable side blade 7 is heated by means of at least one resistor 10, which is preferably housed as near as possible the cutting edge of the blade 7, in a corresponding external recess 207 provided on the lower side of the blade itself. In the body of the blade and/or in the body of the bladeholder saddle 8, there is additionally provided at least one temperature detecting probe 11. Heating of the movable side blade 7 can be controlled and maintained at the desired temperature in a way which is evident for those skilled in the art, by means of the resistor(s) and with the help of the temperature controlling probe(s) 11.

In the embodiment shown in figs. 1 and 2, the temperature of the trimming movable blade is controlled (according to the thickness and type of material of the thermoformed plate 3) in such a way as to produce a clean and accurate trimming cut of the edge of the thermoformed plate 3 itself, eventually allowing also a reduced cutting pressure for pushing the movable blade 7 against the external side anvil surface of the mold. In the particular case of a two- or more layer thermoformed plate, like the illustrated one, the temperature of the trimming mobile blade 7 is also preferably selected in such a way as to produce - beside trimming - also welding of the folded edge 104 of the external cover layer 4 on the head surface of the edges of the lower layer(s) 5, 6, so that there are avoided the partial shrinking of said folding edge 104, and hence the aesthetic defect of leaving the trimming edge partially uncovered and not finished, as can occur with prior art cold blades.

In the embodiment shown in figs. 3 and 4, the temperature of the trimming and molding blade 7 is preferably selected in such a way as to produce - beside an easy and clean trimming - also an accurate and stable deformation (molding) of that portion 103 of the edge of the thermoformed plate 3, which is folded on the external inclined molding surface 107 of the blade 7. Moreover, as illustrated in the embodiment of figs 3 and 4, the temperature of the trimming and molding blade 7 can be also selected in such a way as to melt and thus actually remove the intermediate layer 5 of foamed plastic material correspondingly to the inclined terminal end 103 of the edge of the thermoformed plate 3, and to force the external cover layer 4 to adhere and weld correspondingly to said inclined end 103, directly on the third layer 6, made for example of WOODSTOCK, as shown, in particular, in fig. 4. In this way, there are obtained a certain thinning and/or a different stiffening of said inclined terminal end 103 of the edge of the thermo-formed plate 3, especially avoiding also aesthetic finishing defects, as there is prevented the shrinking - at said inclined end 103 itself - of the external cover layer 4, welded on the whole of said end 103 directly on the relatively stiff material of the third layer 6. The elimination of the aesthetic defects can be obviously obtained even when the temperature of the heated blade 7 is such that the intermediate layer 5 is not melted, but the three layers 4, 5, and 6 are welded in correspondence with the inclined terminal end 103 of the thermoformed plate 3.

The cutting edge of the heatable trimming and eventually molding blade 7 is generally straight with a consequently straight trimming cut. Heating of blade 7 and its consequent easier and/or more accurate trimming cut also allow to use the hot blade 7 to give the edge of the object obtained by thermoforming the plate or sheet 3, while trimming, a particular shape or profile for aesthetic or functional purposes, for instance a wavy or toothed profile, the latter with square, pointed or any else teeth. For this purpose, in the invention, the cutting edge of at least one of the heatable blades 7, with which the thermoforming mold is supplied, can have any suitable profile, transversely to the length of the cutting edge itself, and can be for example wavy (see fig. 5) or have a zigzag profile (see fig. 6) or square toothed, or the like.

The invention is obviously not limited to the embodiments described and illustrated hereinbefore, but - beside being applicable to any thermoforming mold with movable side blades for trimming and eventually also molding - can be widely varied and modified, especially in construction, and particularly for all that relates to the heating of blades and their temperature control. So, for example, the movable side blade(s) can be heated directly, like in the illustrated embodiments, or indirectly, by conduction, through the provided bladeholder saddle 8. Heating can be also made by means of exposure to infrared irradiation and/or by quartz lamps or through circulation of a hot fluid (oil, vapour) or even bringing the blade into contact with a hot body and/or making it lick by a hot gaseous current and/or by a flame. All this is without departing from within the above described and furtherly claimed scope.

## Claims

1. Thermoforming mold, provided with a counter mold (2) co-operating at least with a fringe part (1) of the mold, and with one or more movable side members (7), which can be approached and moved away to and from the mold, for trimming and eventually molding the edges of the thermoformed object, while the latter is still secured between the mold and the counter mold (2), characterised in that the said side members (7) of the mold, are in the form of side blades and at least one of the movable side blades is heatable.

2. Mold as claimed in claim 1, designed for thermoforming objects provided with an external cover layer (4) and at least one supporting layer (5, 6), at least one of these layers (4, 5, 6) being made of thermoplastic material, characterised in that:
- - at least one of the movable side blades (7) is provided with a cutting part
- the said cutting part being shaped in such a way as to produce at the same time the trimming of the corresponding edge of the thermoformed object and the folding of the edge (104) of the external cover layer (4) towards the mold, on the head surface of the edge of the supporting layer(s) (5, 6);
- the said movable side blade (7) being heatable to such a temperature as to produce the welding of the folded edge (104) of the external covering edge (4) on the head surfaces of the edge of the lower layer(s) (5, 6) in a covering position of at least part of the said head surfaces.

3. Mold as claimed in claims 1 or 2, in which at least one of the movable side blades (7) has a molding surface (107) co-operating - on interposition of the terminal end (103) of the edge of the thermoformed object (3) - with a corresponding matching external molding surface of the mold, wherein the movable side blade (7) is heatable to a softening temperature of the terminal end (103) of the edge of the thermoformed object between the matching molding surfaces of the mold and of the blade itself, in order to facilitate producing or stabilise the molding.

4. Mold as claimed in claim 3, wherein the at least one movable side blade (7) is heated to a welding temperature of the layers of the thermoformed objects at the terminal end (103) of its edge between the matching molding surfaces of the mold and of the blade (7) itself.

5. Mold as claimed in claim 3, designed to thermoforming objects provided of at least three layers (4, 5, 6), the intermediate of the latter being made of foamed material and at least one of the other layers being made of thermoplastic material, wherein the movable side blade (7) is heatable to such a temperature as to cause - correspondingly with the terminal end of the edge of the thermoformed object between the matching molding surfaces of the mold and of the blade (7) itself - the melting and collapsing of the intermediate layer (5) made of foamed material and the welding of the other layers (4, 5).

6. Mold as claimed in claims 3 to 5, wherein the external side molding surface of the mold is composed of a junction inclined surface between the protruding side peripheral and preferably rounded edge of the mold and the rest of the external side surface of the mold itself, while the matching molding surface (107) of the movable side blade (7) is composed of a corresponding inclined surface (107), terminating with the cutting edge of the blade (7) itself.

7. Mold as claimed in one or more of the preceding claims, wherein the cutting edge of at least one of the heatable trimming and eventually molding side blades (7) is profiled transversely to its length and particularly has a wavy, zigzag, toothed, or else profile.

8. Mold as claimed in one or more of the preceding claims, wherein at least one of the heatable trimming and eventually molding side blades (7) is heated by means of at least one resistors (10), preferably placed near the cutting edge of the blade (7) and incorporated inside it or housed in an external recess (207) of it, or applied outside the blade (7).

9. Mold as claimed in one or more of the preceding claims, wherein at least one of the heatable side blades (7) is provided with a device (11) for temperature detecting.

10. Mold as claimed in claims 8 to 9, wherein the resistor(s) (10) for heating the movable side blades (7), with which the mold is supplied, and their respective detecting devices (11) for the temperature of said blade(s) are connected to a varying, controlling and maintaining device for the temperature of the blade(s) themselves.

## Patentansprüche

1. Werkzeug zum Thermoformen mit einem Gegenwerkzeug (2), welches mit zumindest einem Ringteil (1) des Werkzeuges zusammenwirkt und mit einem oder mehreren beweglichen Seitenteilen (7), die auf das Werkzeug angenähert und davon wegbewegt werden können, um die Kanten des thermoverformten Gegenstandes zu trimmen und gegebenenfalls zu pressen, während das letztere immer noch zwischen dem Werkzeug und dem Gegenwerkzeug (2) gesichert ist, dadurch gekennzeichnet, daß die Seitenteile (7) des Werkzeuges in der Gestalt von Beschneidelementen ausgebildet sind und zumindest eines der bewegbaren Beschneidelemente heizbar ausgebildet ist.

2. Werkzeug nach Anspruch 1, welches zum Thermoverformen von Gegenständen vorgesehen ist, mit einer äußeren Deckschicht (4) und zumindest einer Trägerschicht (5, 6), wobei zumindest eine dieser Schichten (4, 5, 6) aus thermoplastischem Material ausgebildet ist, dadurch gekennzeichnet, daß
- zumindest eines der bewegbaren Beschneidelemente (7) ein Schneidenteil aufweist;
- das Schneidenteil in einer solchen Form ausgebildet ist, um gleichzeitig die entsprechende Kante des thermoverformten Gegenstandes zu trimmen und die Kante (104) der äußeren Deckschicht (4) gegen das Werkzeug zur Stirnfläche der Kante der Trägerschicht(en) (5, 6) zu falten;
- das bewegbare Beschneidelement (7) auf eine Temperatur aufheizbar ist, um die gefaltete Kante (104) der äußeren Deckschicht (4) auf den Stirnflächen der Kante der unteren Schicht(en) (5, 6) in einer zumindest teilweise abdeckenden Position auf den Stirnseiten zu verschweißen.

3. Werkzeug nach einem der Ansprüche 1 oder 2, bei dem zumindest eines der bewegbaren Beschneidelelemente (7) eine Formoberfläche (107) aufweist, die - unter Zwischenlagerung des begrenzten Endes (103) der Kante des thermoverformten Gegenstandes (3)- mit einer entsprechend passenden äußeren Formoberfläche des Werkzeuges zusammenwirkt, wobei das bewegbare Beschneidelement (7) auf eine das begrenzte Ende (103) der Kante des thermoverformten Gegenstandes erweichende Temperatur aufheizbar ist, das zwischen den angepaßten Formoberflächen des Werkzeuges und seiner Klinge vorgesehen ist, um die Herstellung zu erleichtern oder das Pressen zu stabilisieren.

4. Werkzeug nach Anspruch 3, bei dem das zumindest eine bewegbare Beschneidelement (7) auf eine Schweißtemperatur der Schichten des thermoverformten Gegenstandes am begrenzten Ende (103) seiner Kante zwischen den passenden Formoberflächen des Werkzeuges und der Klinge (7) aufheizbar ist.

5. Werkzeug nach Anspruch 3, welches zum Thermoverformen von Gegenständen ausgebildet ist, mit zumindest drei Schichten (4, 5, 6), bei denen die dazwischenliegende der Letzterwähnten aus geschäumtem Material und zumindest eine der anderen Schichten aus thermoplastischem Material ausgebildet ist, wobei das bewegbare Beschneidelement (7) auf eine Temperatur aufheizbar ist, um - entsprechend zu dem begrenzten Ende der Kante des thermoverformten Gegenstandes zwischen den passenden Werkzeugoberflächen des Werkzeuges und der Klinge (7) - die dazwischenliegende Schicht (5), welche aus geschäumtem Material hergestellt ist, zu schmelzen und zu knicken und die anderen Schichten (4, 5) zu verschweißen.

6. Werkzeug nach einem der Ansprüche 3 bis 5, bei dem die äußere seitliche Formoberfläche des Werkzeuges aus einer geneigten Verbindungsoberfläche zwischen dem vorstehenden Seitenrand und der vorzugsweise runden Kante des Werkzeuges und dem Rest seiner äußeren seitlichen Oberfläche des Werkzeuges zusammensetzt, während die passende Formoberfläche (107) des bewegbaren Beschneidelementes (7) sich aus einer entsprechend geneigten Oberfläche (107), die mit der Schneidkante der Klinge (7) endet, zusammensetzt.

7. Werkzeug nach einem oder mehreren der vorhergehenden Ansprüche, bei dem die Schneidkante des zumindest einen heizbaren Beschneidelementes (7) zum Trimmen und gegebenenfalls Pressen quer zu seiner Länge profiliert ist und insbesondere ein wellenförmiges, zickzackförmiges gezahntes Profil oder dergleichen aufweist.

8. Werkzeug nach einem oder mehreren der vorhergehenden Ansprüche, bei dem zumindest eines der heizbaren Beschneidelemente (7) zum Trimmen und gegebenenfalls Pressen durch zumindest einen Widerstand (10) aufheizbar ist, der vorzugsweise nahe der Schneidkante der Klinge (7) angeordnet und innerhalb dieser vereinigt ist oder in einer daran angeordneten äußeren Aussparung (207) vorgesehen ist oder außerhalb der Klinge (7) angewandt ist.

9. Werkzeug nach einem oder mehreren der vorhergehenden Ansprüche, bei welchem zumindest eines der heizbaren Beschneidelemente (7) eine Vorrichtung (11) zur Temperaturermittlung aufweist.

10. Werkzeug nach einem der Ansprüche 8 oder 9, bei welchem der Widerstand (die Widerstände) (10) zum Aufheizen der bewegbaren, an dem Werkzeug vorgesehenen Beschneidelemente (7) und ihren entsprechenden Ermittlungsvorrichtungen (11) für die Temperatur der Klinge(n) zu einer Wechsel-, Überwachungs- und Versorgungsvorrichtung für die Temperatur seiner Klinge(n) verbunden ist.

## Revendications

1. Moule de thermoformage muni d'un contre-moule (2) qui coopère au moins avec une partie de bordure (1) du moule et d'un ou de plusieurs éléments latéraux mobiles (7) qui peuvent être rapprochés et éloignés du moule, destinés à finir et éventuellement mouler les bords de l'objet thermoformé pendant que ce dernier est encore fixé entre le moule et le contre-moule (2), caractérisé en ce que lesdits éléments latéraux (7) du moule sont formés de lames latérales et au moins une des lames latérales mobiles peut être chauffée.

2. Moule selon la revendication 1, destiné à thermoformer des objets munis d'une couche de recouvrement extérieure (4) et d'au moins une couche porteuse (5,6), au moins une de ces couches (4, 5, 6) étant faite de matière thermoplastique, caractérisée en ce que:
- au moins une des lames latérales mobiles (7) est munie d'une partie coupante,
- ladite partie coupante étant conformée de manière à produire en même temps la finition du bord correspondant de l'objet thermoformé et le repliage du bord (104) de la couche de recouvrement extérieure (4) vers le moule, sur la surface de tête du bord de la ou des couche(s) porteuse(s) (5,6);
- ladite lame latérale mobile (7) pouvant être chauffée à une température appropriée pour assurer le soudage du bord replié (104) du bord de recouvrement extérieur (4) sur les surfaces de tête du bord de la ou des couches inférieures (5,6) dans une position de recouvrement d'au moins une partie desdites surfaces de tête.

3. Moule selon les revendications 1 ou 2, dans lequel au moins une des lames latérales mobiles (7) présente une surface de moulage (107) qui coopère avec interposition de l'extrémité terminale (103) du bord de l'objet thermoformé (3) - avec une surface de moulage extérieure complémentaire correspondante du moule, dans lequel la lame latérale mobile (7) peut être chauffée à une température de ramollissement de l'extrémité terminale (103) du bord de l'objet thermoformé entre les surfaces de moulage complémentaires du moule et de la lame afin de faciliter la production du moulage ou de le stabiliser.

4. Moule selon la revendication 3, dans lequel au moins une lame latérale mobile (7) est chauffée à une température de soudage des couches des objets thermoformés à l'extrémité terminale (103) de son bord entre les surfaces de moulage complémentaires du moule et de la lame (7) elle-même.

5. Moule selon la revendication 3, destiné à thermoformer des objets comprenant au moins trois couches (4, 5, 6), la couche intermédiaire étant faite de matière en mousse et au moins une des autres couches étant faite d'en matière thermoplastique, dans lequel la lame latérale mobile (7) peut être chauffée à une température appropriée pour provoquer - au niveau de l'extrémité terminale du bord de l'objet thermoformé entre les surfaces de moulage complémentaires du moule et de la lame (7) - la fusion et l'effondrement de la couche intermédiaire (5) faite de matière en mousse et le soudage des autres couches (4, 5).

6. Moule selon les revendications 3 à 5, dans lequel la surface de meulage latérale extérieure du moule est composée d'une surface inclinée de jonction entre le bord périphérique latéral saillant et de préférence arrondi du moule et le reste de la surface latérale extérieure du moule, tandis que la surface de moulage complémentaire (107) de la lame latérale mobile (7) est faite d'une surface (107) inclinée de façon correspondante, qui se termine par le bord coupant de la lame (7) elle-même.

7. Moule selon une ou plusieurs des revendications précédentes, dans lequel le bord coupant d'au moins une des lames latérales de finition et éventuellement de moulage pouvant être chauffées est profilée transversalement à sa longueur et possède en particulier un profil ondulé, en zigzag, denté ou autre.

8. Moule selon une ou plusieurs des revendications précédentes, dans lequel au moins une des lames latérales de finition et éventuellement de moulage pouvant être chauffée est chauffée au moyen d'au moins une résistance (10) placée de préférence à proximité du bord coupant de la lame (7) et incorporée à l'intérieur de cette lame ou logée dans un évidement extérieur (207) de cette lame, ou encore appliquée à l'extérieur de la lame (7).

9. Moule selon une ou plusieurs des revendications précédentes, dans lequel au moins une des lames latérales (7) pouvant être chauffées est munie d'un dispositif (11) pour détecter la température.

10. Moule selon les revendications 8 à 9, dans lequel la ou les résistances (10) pour chauffer les lames latérales mobiles (7) dont le moule est muni, et leurs dispositifs de détection (11) respectifs prévus pour la température de la ou des lames sont connectées à un dispositif de réglage, contrôle et maintien de la température de la lame ou des lames elles-mêmes.
